# EUROPEAN PATENT SPECIFICATION

(11) **EP 1 504 628 B1**
(45) Date of publication and mention of the grant of the patent: **08.02.2006**
(21) Application number: 02807336.9
(22) Date of filing: 10.07.2002
(51) Int. Cl.: H04Q 9/00, G08C 17/00, G06F 11/25

(54) **MEASURING DEVICE WITH COMPETING PROCESS CONTROL**
MESSEINRICHTUNG MIT KONKURRENZ-PROZESSSTEUERUNG
DISPOSITIF DE MESURE A COMMANDE DE PROCESSUS CONCURRENT

(30) Priority: 03.05.2002 EP 02009907
(43) Date of publication of application: 09.02.2005
(73) Proprietor: Agilent Technologies, Inc., Palo Alto, CA 94306 (US)
(72) Inventor: GERSTER, Andreas, 72184 Eutigen (DE); WALTHER, Stefan, 71083 Herrenberg (DE); HILLIGES, Martin, 71116 Gärtringen (DE)
(74) Representative: Barth, Daniel Mathias
(86) International application number: PCT/EP2002/007668
(87) International publication number: WO 2003/094569

(56) References cited:
- WO-A-01/18652
- WO-A-01/46925
- US-A1- 2001 047 125
- US-A1- 2002 013 835
- US-A1- 2002 019 712

## Description

### BACKGROUND OF THE INVENTION

Measuring devices generally comprise a measuring unit for executing the measurement and a user interface allowing a user to control the measurement and to read out measurement results. While most measurement devices generally physically incorporate such user interface, it is also known to provide such user interface through a computer system coupled to the measuring device e.g. through a GPIB-bus, or another known bus system.

US2002/0019712A1 discloses remote monitoring of electricity consumption for an electric meter in a network having plural sensors and communication devices.

WO01/18652A1 discloses an expandable network based expert system, wherein an expert system engine collects measurements from a network-based system.

### SUMMARY OF THE INVENTION

It is an object of the present invention to provide an improved measuring system. The object is solved by the independent claims. Preferred embodiments are shown by the dependent claims.

According to the present invention, a measuring device comprises at least one measuring unit, each being adapted for (preferably physically) executing at least one measurement function to measure a physical parameter. Such measurement function can be, for example, to measure the physical parameter (e.g. power, loss, frequency, etc.) of a device under test (DUT). The measuring device further comprises an application control unit adapted for controlling and/or administering competing processes caused by plural application interfaces acting on and/or cooperating with the measuring device.

The term "application interface" as used herein shall represent any kind of application initiating and/or executing a measurement function, or a part thereof, and/or handling a measurement result of a measurement function. Handling a measurement result might be any kind of visualization (e.g. printing, plotting, displaying, et.), data deposition (e.g. storing), data processing (e.g. pre- or post-processing of measuring results), etc. The application interface might be represented by a user interface, a program (such as a computer program) or algorithm, feedback system, etc. The application interface might be internal or external with respect to the measuring device, and couple with the measuring device through any kind of transmission path (e.g. wired or wireless) again internal or external with respect to the measuring device. A connection unit might be provided at the measuring device allowing coupling one or more external application interfaces to the measuring device.

Competing processes can be caused by at least one of the following: one measurement function and/or result is accessed by different application interfaces, different but interrelated measurement functions and/or results are accessed by at least one application interface, different application interfaces are differently controlling one measuring unit or plural but interrelated measuring units at the same time or as long as a current measurement function is executed, representing and/or modifying (e.g. same) measuring results by different application interfaces, etc.

While the measuring device might comprise an own local application interface, one or more external application interfaces might be coupled through the connection unit to the measuring device. The application control unit administers the access of all application interfaces (whether external or internal) onto each measuring unit and further controls access of the application interfaces for competing processes, so that e.g. a measurement function and/or result controlled by one application interface (coupled to the measuring device) will not be interfered by another measurement function and/or result controlled by another application interface (also coupled to the measuring device).

In case that e.g. one of the application interfaces modifies measurement results, the application control unit will coordinate such modification with the one or more other application interfaces also accessing those measurement results. Such coordination can be e.g. that any modification executed will be automatically provided to all other application interfaces representing those measurement results.

Each external application interface adapted to be coupled to the measuring device preferably comprises an application connection unit for coupling the external application interface through the transmission path to the connection unit of the measuring device. Further, each external application interface preferably comprises a control unit for controlling measurement function(s) to be executed and/or for controlling a representation unit for representing information e.g. about the measurement function(s) to be executed, control parameters set by the control unit, and/or measurement results provided from the measuring device. The representation unit might comprise a display, monitor, or the like.

In one embodiment, one or more application interfaces can be applied for controlling the measuring device as well as for only representing information about measurements actually controlled e.g. by a different application interface.

In case that one application interface wants to act on a measurement controlled by a different application interface, the application control unit of the measuring device will examine that request for potential influences on this or other measurement functions and/or results and will preferably either allow, reject or postpone such request, e.g. dependent on information available to the application control unit such as e.g. priorities, overrides, algorithms, rule-sets, etc. The application control unit can thus allow and control coexistence of plural application interfaces without adversely influencing each other or the measurements.

In a preferred embodiment, the transmission path is embodied as a network, which can be provided as wired and/or wireless network. Preferably, a LAN or a WAN is used.

In one embodiment, each application interface further comprises an identification unit allowing unambiguously identifying each application interface. This is in particular useful when plural (e.g. external) application interfaces act on the measuring device. Identification can be realized by (e.g. automatically) adding a unique identifier ID of the requesting application interface to each request. This ID may e.g. be passed to the application interface by the application control unit when the application interface contacts the measuring device the first time.

In a preferred embodiment, the application control unit provides control for competing processes caused by requests from one coupled application interface, e.g. resulting from concurrently initiating or executing competing measurement functions (by the same or different measuring units). For that purpose the application control unit might execute a consistency check for each request for a measurement function or result.

In operation when only one application interface is coupled to the measuring device, the application control unit will e.g. fully allow the coupled application interface to control each measuring device or restrict access of the application interface e.g. depending to a predefined set of rules.

In operation when plural (internal and/or external) application interfaces are coupled to the measuring device, the application control unit will receive all requests from each application interface (e.g. to control a respective measuring unit or to receive or modify information about measurements including measurement results). The application control unit preferably uses the application interface ID, which preferably is a part of the request, to identify the initiator of the request and to decide whether to allow the execution of the request, to postpone or to reject the request. In addition depending on its configuration, the application control unit may inform other application interfaces about the request. The actual behavior of the application control unit depends on the current access rights of the application interface to the measuring device.

In a preferred embodiment, plural measuring devices are coupled through respective connection units to a network. Each measuring device preferably has a unique address within the network. Each application interface coupled within the network can then individually address each measuring device for providing control or exchanging information as explained above. Thus, each measuring device within the network can be controlled e.g. from remote by a remote (e.g. external) application interface coupled to the network. Accordingly, each application interface can receive information from each measuring device within the network.

In a preferred embodiment, a synchronization is provided in order to reduce or avoid dead lock situations caused e.g. when more than one application interfaces access on more than one measuring units (of one or more measuring devices). Such dead lock situation might arise e.g. when two application interfaces are each holding an exclusive access on a respective one of the measuring units, but both application interfaces are 'waiting' to access other one of the measuring units (for example before resuming from the exclusive access). Such synchronization can be accomplished e.g. by establishing a 'master - slave' relationship, so that one application control unit is the 'master' application control unit and all other 'slave' application control units must synchronize requests with this 'master' application control unit.

Deadlock situation can be avoided, if every application interface has only exclusive access to one set of measuring units at one time and first has to give back access rights of the complete set once it needs a modified set of measuring units and to acquire exclusive access rights to the modified set from the application control unit within one step. Depending on the current state of the measuring device, the application control unit may give exclusive access or not.

Preferred embodiments of the invention thus allow providing an entirely new architecture for measuring devices by breaking off - without virtually any limitation - the conventionally rigid linkage between measuring unit and application interface.

Embodiments of the invention even allow to fully separate (e.g. physically) measuring units from application interfaces, so that no local application interface is required. On the other hand, since plural measuring devices in preferred embodiments are controllable e.g. by one application interface, effective control, e.g. on production floor with several measuring devices can be achieved e.g. even from (physically) remote.

In a preferred embodiment, an external application interface can be embodied as either one of a standard server or desktop computer, a notebook computer, a pen tablet computer, a handheld computer, or pocket computer, as well as a PDA or a mobile phone, or a hardware feedback system, e.g. an automatic positioning system. If the external application interface runs on a computer, it may be either equipped with a graphical user interface or may run as a service without any graphical representation. If the external application interface is equipped with a' graphical user interface, it preferably uses a touch-screen for easy pen-based operation. Examples for those touch-screen based computers are the LifeBook B Series notebook PC or the Stylistic 3500, Stylistic LT P-600 or PenCentra 200 pen tablet PC provided from Fujitsu Computers.

The invention can be partly or entirely embodied or supported by one or more suitable software programs, which can be stored on or otherwise provided by any kind of data carrier, and which might be executed in or by any suitable data processing unit.

### BRIEF DESCRIPTION OF THE DRAWINGS

Other objects and many of the attendant advantages of the present invention will be readily appreciated and become better understood by reference to the following detailed description when considering in connection with the accompanied drawings. Features that are substantially or functionally equal or similar will be referred to with the same reference sign(s).

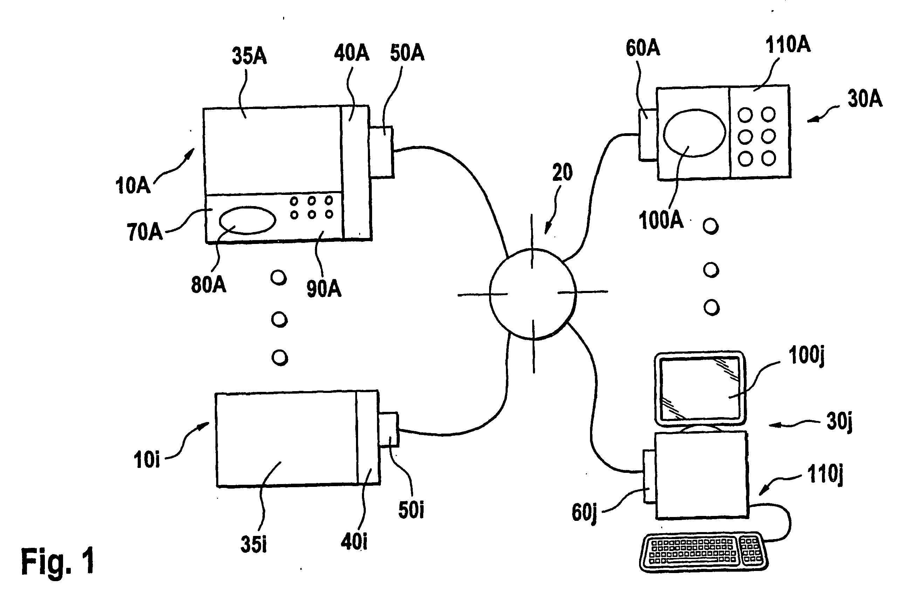

Figure 1 illustrates an example according to the present invention.

### DETAILED DESCRIPTION OF THE INVENTION

In Figure 1, a plurality of measuring devices 10A, ..., 10i are coupled to a network 20. A plurality of external (with respect to the measuring devices 10i) application interfaces 30A, ..., 30j are further coupled to the network 20, which can be any kind of network e.g. using wired and/or wireless transmission.

Each measuring device 10i comprises at least one measuring unit 35i each for executing a respective measurement function, an application control unit 40i for controlling access of one or more application interfaces, and a connection unit 50i for connecting to the network 20. Each external application interface 30 also comprises an application connection unit 60j for connecting to the network 20.

In the example of Figure 1, the measuring device 10A further comprises a local application interface 70A having a display 80A and control unit 90A. While the control unit 90A allows controlling measurement functions provided by each measuring unit 35A, the display 80A allows displaying measurement information such as measuring results provided by each measuring unit 35A. In contrast to the measuring device 10A, the measuring device 10i does not comprise an own local application interface.

In the example of Figure 1, the external application interface 30A comprises a display 100A and a control unit 110A just in accordance with the functions of the display 80A and the control unit 90A. The external application interface 30j in the example of Figure 1 is embodied as a general data processing unit having a monitor 100j and a control unit 110j comprised of a standard processing unit with a terminal.

Each device coupled to the network 20 is provided with a unique address within the network 20.

In the example as shown here, the application interfaces substantially represent user interfaces each allowing a user interaction. However, other type of application interfaces with or without option for user invention can be applied accordingly, for example for periodically and/or automatically executing measuring functions and/or to periodically and/or automatically requesting measuring results (e.g. for graphical representation or storing).

In operation, each measuring unit 35i of each measuring device 10i can be controlled by one or more of the (local or external) application interfaces (70i/30j). In an example wherein the measuring device 10A is to be controlled by its local application interface 70A as well by the external application interface 30A, the application control unit 40A will control each access of the local application interface 70A as well as of the external application interface 30A onto the measuring unit 35A. In case that the application control unit 40A detects competing processes requested by both application interfaces 70A and 30A, the application control unit 40A will administer such competing processes and provides control to either one of the application interfaces 70A and 30A, dependent on pre-given information such as access priorities etc.

In an example, wherein the local application interface 70A presently controls a measurement executed by the measurement unit 35A, and the external application interface 30A requests the measurement unit 35A to execute a different measurement, the application control unit 40A will - dependent on its setting - either refuse the request from the external application interface 30A, pause the current measurement requested from the local application interface 70A, or wait with an execution of the request from the external application interface 30A until the currently measurement controlled by the local application interface 70A has been terminated.

In an example wherein the measuring unit 35A presently executes a measurement requested and controlled by the external application interface 30A, and the local application interface 70A requests a modification of the current measurement, the application control unit 40A determines the priority of the application interfaces 70A and 30A and will assign control of the measuring unit 35A to either one of the external application interfaces 30A or 70A dependent which one has the higher priority. In case that the external application interface 30A has higher priority, the application control unit 40A might reject the request from the local application interface 70A. In case that the priority of the local application interface 70A is higher than the priority of the external application interface 30A, the application control unit 40A might allow the request to modify the measurement.

In case that plural application interfaces 30j request control over one of the measuring units 35i, the corresponding application control unit 40i will handle such request accordingly.

As seen from the example of Figure 1, the measuring device 10i can also be provided without local application interface and might be controlled by any one or plural of the external application interfaces 30j or even by the local application interface 70A of a different measuring device 10A.

## Claims

1. A measuring device (10) comprising:
at least one measuring unit (35), each being adapted for executing at least one measurement function to measure a physical parameter, and
an application control unit (40) adapted for controlling and/or administering competing processes caused by plural application interfaces acting on the at least one measurement function of the measuring unit (35),
wherein each application interface represents an application initiating and/or executing at least one measurement function, or a part thereof, and
wherein competing processes of plural application interfaces are caused by at least one of the following: one measurement function and/or result is accessed by different application interfaces, different but interrelated measurement functions and/or results are accessed by at least one application interface, different application interfaces are differently controlling one measuring unit or plural but interrelated measuring units at the same time or as long as a current measurement function is executed, representing and/or modifying measuring results by different application interfaces.

2. The measuring device according to claim 1, further comprising a connection unit (50) adapted for coupling one or more external application interfaces (30), external with respect to the measuring device, through a transmission path (20) to the measuring device.

3. The measuring device according to claim 1 or any one of the above claims, further comprising an own local application interface.

4. The measuring device according to claim 1 or any one of the above claims, wherein the handling of a measurement result comprises at least one of: visualization, data deposition, or data processing.

5. The measuring device according to claim 1 or any one of the above claims, wherein at least one application interface comprises at least one of a user interface, a program or algorithm, or a feedback system.

6. The measuring device according to claim 1 or any one of the above claims, wherein the application control unit is adapted to administer access of all application interfaces onto each measuring unit and/or to control access of the application interfaces for competing processes.

7. The measuring device according to claim 1 or any one of the above claims, wherein the application control unit is adapted to control access of the application interfaces for competing processes so that a measurement function controlled by one application interface, coupled to the measuring device, will not be interfered by another measurement function controlled by another application interface, coupled to the measuring device.

8. The measuring device according to claim 1 or any one of the above claims, wherein the application control unit coordinates a modification of measurement results provided by one of the application interfaces with each other application interfaces accessing those measurement results.

9. A measuring system, comprising:
the measuring device (10) according to claim 1 or any one of the above claims, and
one or more application interfaces (30) adapted to be coupled to the measuring device (10), each application interface (30) comprising:
an application connection unit (60) for coupling the external application interface (30) through a transmission path (20) to the connection unit (50) of the measuring device (10), and
a control unit (110) for controlling at least one of: one or more measurement functions to be executed by the measuring device (10), a representation unit (100) for representing information, control parameters set by the control unit (110), and measurement results provided from the measuring device (10).

10. The measuring system of claim 9, wherein at least one external application interface is applied for controlling the measuring device as well as for representing information about measurements controlled by a different application interface.

11. The measuring system of claim 9 or 10, wherein in case that one application interface wants to act on a measurement function controlled by a different application interface, the application control unit of the measuring device will examine that request for potential influences on this or other measurement functions and will either allow, reject or postpone such request, dependent on information available to the application control unit.

12. The measuring system of claim 9 or any one of the above claims, wherein each application interface further comprises an identification unit allowing unambiguously identifying each application interface.

13. The measuring system of claim 12, wherein the identification unit is adapted for adding a unique identifier of the requesting application interface to each request.

14. The measuring system of claim 9 or any one of the above claims, further comprising plural measuring devices (10i), each coupled through its connection unit (50i) to the network (20).

15. The measuring system of claim 14, wherein each measuring device has a unique address within the network.

16. The measuring system of claim 14 or 15, wherein each application interface can individually address each measuring device for providing control or exchanging information.

17. A method for operating a measuring system of claim 9 or any one of the above claims, the method comprising the steps of:
(a) when only one application interface is coupled to one measuring device: allowing full or limited access for the coupled application interface to control the one measuring device,
(b) when plural application interfaces are coupled to one measuring device: receiving all requests from each application interface to either control the one measuring device or to receive or modify information about measurement functions and/or measurement results, and controlling and administering competing processes caused by the plural application interfaces acting and/or cooperating with the one measuring device.

18. The method of claim 17, further comprising the step of:
providing a synchronization in order to reduce or avoid dead lock situations caused by requests from more than one application interfaces accessing one measuring device.

19. The method of claim 18, further comprising the steps of:
establishing a master - slave relationship, so that one application control unit represents the master application control unit and all other slave application control units must synchronize requests with this 'master' application control unit.

20. The method of claim 18 or 19, further comprising the steps of:
providing exclusive access for one application interface only to one set of measuring functions during a time interval,
removing the exclusive access when a modified set of measuring functions is requested the one application interface.

21. A software program or product, preferably stored on a data carrier, for executing all the steps of the method of claim 17 when run on a data processing system such as a computer.

## Revendications

1. Dispositif de mesure (10), comprenant :
- au moins une unité de mesure (35) prévue chacune pour exécuter au moins une fonction de mesure d'un paramètre physique ; et
- une unité de commande d'application (40) prévue pour commander et/ou superviser des processi concurrents provoqués par plusieurs interfaces d'application agissant sur au moins une fonction de mesure de l'unité de mesure (35) ;
dans lequel chaque interface d'application représente une application amorçant et/ou exécutant au moins une fonction de mesure ou une partie ; et
dans lequel des processi concurrents de plusieurs interfaces d'application sont provoqués par au moins une des raisons suivantes : une fonction et/ou un résultat de mesure est lue par différentes interfaces d'application, des fonctions et/ou des résultats de mesure différents mais inter-reliés sont lus par au moins une interface d'application, différentes interfaces d'application commandent, de façon différente, une unité de mesure ou plusieurs unités de mesure mais inter-reliées en même temps ou tant qu'une fonction de mesure en cours est exécutée, représentant et/ou modifiant des résultats de mesure par différentes interfaces d'application.

2. Dispositif de mesure selon la revendication 1, comprenant, de plus, une unité de connexion (50) prévue pour coupler une ou plusieurs interfaces d'application externes (30), externes par rapport au dispositif de mesure, par l'intermédiaire d'un trajet de transmission (20) vers le dispositif de mesure.

3. Dispositif de mesure selon la revendication 1 ou une quelconque des revendications précédentes, comprenant, de plus, sa propre interface d'application locale.

4. Dispositif de mesure selon la revendication 1 ou une quelconque des revendications précédentes, dans lequel le maniement d'un résultat de mesure comprend au moins un élément parmi une visualisation, un dépôt de données ou un traitement de données.

5. Dispositif de mesure selon la revendication 1 ou une quelconque des revendications précédentes, dans lequel au moins une interface d'application comprend au moins un élément parmi une interface d'utilisateur, un programme ou un algorithme ou un système de rétroaction.

6. Dispositif de mesure selon la revendication 1 ou une quelconque des revendications précédentes, dans lequel l'unité de commande d'application est prévue pour superviser l'accès de toutes les interfaces d'application sur chaque unité de mesure et/ou pour commander l'accès des interfaces d'application pour des processi concurrents.

7. Dispositif de mesure selon la revendication 1 ou une quelconque des revendications précédentes, dans lequel l'unité de commande d'application est prévue pour commander un accès des interfaces d'application à des processi concurrents de façon à ce qu'une fonction de mesure commandée par une interface d'application couplée au dispositif de mesure n'interfère pas avec une autre fonction de mesure commandée par une autre interface d'application couplée au dispositif de mesure.

8. Dispositif de mesure selon la revendication 1 ou une quelconque des revendications précédentes, dans lequel l'unité de commande d'application coordonne une modification des résultats de mesure fournis par une des interfaces d'application avec chaque autre interface d'application accédant à ces résultats de mesure.

9. Système de mesure, comprenant :
- le dispositif de mesure (10) selon la revendication 1 ou une quelconque des revendications précédentes ; et
- une ou plusieurs interfaces d'application (30) prévues pour être couplées au dispositif de mesure (10), chaque interface d'application (30) comprenant :
- une unité de connexion d'application (60) pour coupler l'interface d'application externe (30) par l'intermédiaire d'un trajet de transmission (20) à l'unité de connexion (50) du dispositif de mesure (10) ; et
- une unité de commande (110) pour commander au moins un élément parmi une ou plusieurs fonctions de mesure devant être exécutées par le dispositif de mesure (10), une unité de représentation (100) pour représenter l'information, des paramètres de commande établis par l'unité de commande (110) et des résultats de mesure fournis par le dispositif de mesure (10).

10. Système de mesure selon la revendication 9, dans lequel au moins une interface d'application externe est appliquée pour commander le dispositif de mesure ainsi que pour représenter une information sur les mesures commandées par une interface d'application différente.

11. Système de mesure selon la revendication 9 ou 10, dans lequel, dans le cas où une interface d'application désire agir sur une fonction de mesure commandée par une interface d'application différente, l'unité de commande d'application du dispositif de mesure examinera cette demande en ce qui concerne des influences potentielles sur cette fonction ou d'autres fonctions de mesure et soit autorisera, soit rejettera ou différera une telle demande selon l'information disponible pour l'unité de commande d'application.

12. Système de mesure selon la revendication 9 ou selon l'une quelconque des revendications précédentes, dans lequel chaque interface d'application comprend, de plus, une unité d'ID permettant une ID non-ambiguë de chaque interface d'application.

13. Système de mesure selon la revendication 12, dans lequel l'unité d'ID est prévue pour ajouter un identificateur unique de l'interface d'application demanderesse à chaque demande.

14. Système de mesure selon la revendication 9 ou selon l'une quelconque des revendications précédentes, comprenant, de plus, plusieurs dispositifs de mesure (10i) couplés chacun par l'intermédiaire de son unité de connexion (50i) au réseau (20).

15. Système de mesure selon la revendication 14, dans lequel chaque dispositif de mesure possède une adresse unique dans le réseau.

16. Système de mesure selon la revendication 14 ou 15, dans lequel chaque interface d'application peut adresser, de façon individuelle, chaque dispositif de mesure pour assurer une commande ou un échange d'information.

17. Procédé d'actionnement d'un système de mesure selon la revendication 9 ou une quelconque des revendications précédentes, comprenant les étapes suivantes :
a) Lorsqu'une seule interface d'application est couplée à un dispositif de mesure, autoriser un accès total ou limité pour l'interface d'application couplée afin de commander le dispositif de mesure ;
b) lorsque plusieurs interfaces d'application sont couplées à un dispositif de mesure : recevoir toutes les demandes à partir de chaque interface d'application soit pour commander le dispositif de mesure, soit pour recevoir ou modifier l'information concernant les fonctions et/ou les résultats de mesure, et commander et administrer des processi concurrents provoqués par la pluralité d'interfaces d'application agissant et/ou coopérant avec le dispositif de mesure.

18. Procédé selon la revendication 17, comprenant, de plus, l'étape suivante :
- prévisoir une synchronisation afin de réduire ou d'éviter des cas d'interblocage provoqués par des demandes à partir de plus d'une interface d'application accédant à un dispositif de mesure.

19. Procédé selon la revendication 18, comprenant, de plus, l'étape suivante :
- établir une relation maître/esclave de façon à ce qu'une unité de commande d'application représente l'unité de commande d'application maître et que toutes les autres unités esclaves de commande d'application aient à synchroniser des demandes avec cette unité "maître" de commande d'application.

20. Procédé selon la revendication 18 ou 19, comprenant, de plus, les étapes suivantes :
- prévoir un accès exclusif pour une interface d'application seulement à un ensemble de fonctions de mesure pendant un intervalle de temps ; et
- supprimer l'accès exclusif lorsqu'un ensemble modifié de fonctions de mesure est demandé par l'interface d'application.

21. Programme ou produit logiciel, stocké de préférence sur un support de données, pour l'exécution de toutes les étapes du procédé selon la revendication 17 lors d'une exécution dans un système de traitement de données comme un ordinateur.

## Patentansprüche

1. Messgerät (10), das Folgendes umfasst:
mindestens eine Messeinheit (35), wobei jede Messeinheit so ausgelegt ist, dass sie mindestens eine Messfunktion zur Messung eines physikalischen Parameters ausführt, und
eine Anwendungssteuereinheit (40), die so ausgelegt ist, dass sie konkurrierende Prozesse steuert und/oder verwaltet, die von mehreren Anwendungsschnittstellen verursacht werden, welche auf die mindestens eine Messfunktion der Messeinheit (35) einwirken,
wobei jede Anwendungsschnittstelle eine Anwendung darstellt, die mindestens eine Messfunktion oder einen Teil einer Messfunktion einleitet und/oder ausführt, und
wobei konkurrierende Prozesse von mehreren Anwendungsschnittstellen durch mindestens eines von Folgendem verursacht werden: Verschiedene Anwendungsschnittstellen greifen auf eine Messfunktion und/oder auf ein Messergebnis zu, auf verschiedene, aber zusammenhängende Messfunktionen und/oder Messergebnisse wird von mindestens einer Anwendungsschnittstelle zugegriffen, verschiedene Anwendungsschnittstellen steuern auf unterschiedliche Weise eine Messeinheit oder mehrere, aber zusammenhängende Messeinheiten entweder gleichzeitig oder solange eine aktuelle Messfunktion ausgeführt wird, Messergebnisse werden von verschiedenen Anwendungsschnittstellen dargestellt und/oder verändert.

2. Messgerät nach Anspruch 1, das des Weiteren eine Verbindungseinheit (50) umfasst, die so ausgelegt ist, dass sie eine oder mehrere externe Anwendungsschnittstellen (30) - extern in Bezug auf das Messgerät - über einen Übertragungspfad (20) mit dem Messgerät verbindet.

3. Messgerät nach Anspruch 1 oder einem beliebigen der vorstehenden Ansprüche, das des Weiteren eine eigene lokale Anwendungsschnittstelle umfasst.

4. Messgerät nach Anspruch 1 oder einem beliebigen der vorstehenden Ansprüche, wobei die Handhabung eines Messergebnisses mindestens eines von Folgendem umfasst: Darstellung der Daten, Ablage der Daten oder Verarbeitung der Daten.

5. Messgerät nach Anspruch 1 oder einem beliebigen der vorstehenden Ansprüche, wobei mindestens eine Anwendungsschnittstelle mindestens eine Benutzerschnittstelle oder ein Programm oder einen Algorithmus oder ein Rückmeldesystem umfasst.

6. Messgerät nach Anspruch 1 oder einem beliebigen der vorstehenden Ansprüche, wobei die Anwendungssteuereinheit so ausgelegt ist, dass sie den Zugriff aller Anwendungsschnittstellen auf jede Messeinheit verwaltet und/oder den Zugriff der Anwendungsschnittstellen bei konkurrierenden Prozessen steuert.

7. Messgerät nach Anspruch 1 oder einem beliebigen der vorstehenden Ansprüche, wobei die Anwendungssteuereinheit so ausgelegt ist, dass sie den Zugriff der Anwendungsschnittstellen bei konkurrierenden Prozessen so steuert, dass eine Messfunktion, die von einer mit dem Messgerät verbundenen Anwendungsschnittstelle gesteuert wird, nicht von einer anderen Messfunktion beeinträchtigt wird, die von einer anderen mit dem Messgerät verbundenen Anwendungsschnittstelle gesteuert wird.

8. Messgerät nach Anspruch 1 oder einem beliebigen der vorstehenden Ansprüche, wobei die Anwendungssteuereinheit eine Änderung der Messergebnisse, die von einer der Anwendungsschnittstellen bereitgestellt werden, mit jeder anderen Anwendungsschnittstelle koordiniert, die auf diese Messergebnisse zugreift.

9. Messsystem, das Folgendes umfasst:
das Messgerät (10) nach Anspruch 1 oder einem beliebigen der vorstehenden Ansprüche und
eine oder mehrere Anwendungsschnittstellen (30), die so ausgelegt sind, dass sie mit dem Messgerät (10) verbunden werden können, wobei jede Anwendungsschnittstelle (30) Folgendes umfasst:
eine Anwendungsverbindungseinheit (60), um die externe Anwendungsschnittstelle (30) über einen Übertragungspfad (20) mit dem Verbindungseinheit (50) des Messgeräts (10) zu verbinden, und
eine Steuereinheit (110), um mindestens eines von Folgendem zu steuern: eine oder mehrere Messfunktionen, die von dem Messgerät (10) ausgeführt werden sollen, eine Darstellungseinheit (100), um Informationen, von der Steuereinheit (110) gesetzte Steuerparameter und von dem Messgerät (10) bereitgestellte Messergebnisse darzustellen.

10. Messsystem nach Anspruch 9, wobei mindestens eine externe Anwendungsschnittstelle zur Steuerung des Messgeräts sowie zur Darstellung von Informationen über Messvorgänge, die von einer anderen Anwendungsschnittstelle gesteuert werden, verwendet wird.

11. Messsystem nach Anspruch 9 oder 10, wobei die Anwendungssteuereinheit des Messgeräts in dem Fall, in dem eine Anwendungsschnittstelle auf eine Messfunktion einwirken möchte, die von einer anderen Anwendungsschnittstelle gesteuert wird, diese Anforderung für eine mögliche Einflussnahme auf diese oder auf andere Messfunktionen prüft und diese Anforderung in Abhängigkeit von Informationen, die der Anwendungssteuereinheit zur Verfügung stehen, entweder zulässt, zurückweist oder zurückstellt.

12. Messsystem nach Anspruch 9 oder einem beliebigen der vorstehenden Ansprüche, wobei jede Anwendungsschnittstelle des Weiteren eine Kennzeichnungseinheit umfasst, die die eindeutige Kennzeichnung einer jeden Anwendungsschnittstelle ermöglicht.

13. Messsystem nach Anspruch 12, wobei die Kennzeichnungseinheit so ausgelegt ist, dass sie jeder Anforderung eine eindeutige Kennung der anfordernden Anwendungsschnittstelle anfügt.

14. Messsystem nach Anspruch 9 oder einem beliebigen der vorstehenden Ansprüche, das des Weiteren mehrere Messgeräte (10i) umfasst, von denen jedes über seinen Verbindungspfad (50i) mit dem Netzwerk (20) verbunden ist.

15. Messsystem nach Anspruch 14, wobei jedes Messgerät eine eindeutige Adresse in dem Netzwerk hat.

16. Messsystem nach Anspruch 14 oder 15, wobei jede Anwendungsschnittstelle jedes Messgerät einzeln ansprechen kann, um dessen Steuerung zu ermöglichen oder um Informationen auszutauschen.

17. Verfahren zum Betreiben eines Messsystems nach Anspruch 9 oder einem beliebigen der vorstehenden Ansprüche, wobei das Verfahren die folgenden Schritte umfasst:
(a) wenn nur eine Anwendungsschnittstelle mit einem Messgerät verbunden ist: Gestatten des uneingeschränkten oder des eingeschränkten Zugriffs durch die angeschlossene Anwendungsschnittstelle, um das eine Messgerät zu steuern,
(b) wenn mehrere Anwendungsschnittstellen mit einem Messgerät verbunden sind: Empfangen aller Anforderungen von jeder Anwendungsschnittstelle für die Steuerung des einen Messgeräts oder aber zum Empfang oder zur Änderung von Informationen über Messfunktionen und/oder Messergebnissen und Steuern und Verwalten von konkurrierenden Prozessen, die von den mehrfach vorhandenen Anwendungsschnittstellen verursacht werden, welche auf das eine Messgerät einwirken und/oder mit dem einen Messgerät zusammenarbeiten.

18. Verfahren nach Anspruch 17, das des Weiteren folgenden Schritt umfasst:
Ermöglichen einer Synchronisation, um Blockierungen zu verringern oder zu vermeiden, die durch Anforderungen von mehr als einer Anwendungsschnittstelle verursacht werden, welche auf ein Messgerät zugreifen.

19. Verfahren nach Anspruch 18, das des Weiteren die folgenden Schritte umfasst:
Herstellen einer Master-Slave-Beziehung, so dass eine Anwendungssteuereinheit die Haupt-("Master"-) Anwendungssteuereinheit darstellt und alle anderen untergeordneten ("Slave"-) Anwendungssteuereinheiten Anforderungen mit dieser Haupt-Anwendungssteuereinheit synchronisieren müssen.

20. Verfahren nach Anspruch 18 oder 19, das des Weiteren die folgenden Schritte umfasst:
Gewähren des ausschließlichen Zugriffs durch eine Anwendungsschnittstelle auf nur einen Satz von Messfunktionen während eines Zeitintervalls,
Aufheben des Rechts auf ausschließlichen Zugriff, wenn ein geänderter Satz von Messfunktionen von der einen Anwendungsschnittstelle angefordert wird.

21. Software-Programm oder Software-Produkt, das vorzugsweise auf einem Datenträger gespeichert wird, um alle Schritte des Verfahrens nach Anspruch 17 durchzuführen, wenn es auf einem Datenverarbeitungssystem wie zum Beispiel einem Rechner ausgeführt wird.
